# FASCICULE DE BREVET EUROPEEN

(11) **EP 3 524 914 B1**
(45) Date de publication et mention de la délivrance du brevet: **31.03.2021**
(21) Numéro de dépôt: 19305146.3
(22) Date de dépôt: 07.02.2019
(51) Int. Cl.: F28F 9/00, F28D 1/047, F28D 1/06, F28D 20/00, F28F 1/02

(54) **APPAREIL DE CHAUFFAGE THERMODYNAMIQUE A CONDENSEUR MICRO CANAUX OPTIMISE POUR UNE CHARGE MINIMALE EN FLUIDE FRIGORIGENE**
THERMODYNAMISCHES HEIZGERÄT MIT OPTIMIERTEM MIKROKANALKONDENSATOR FÜR EINE MINIMALE BELADUNG MIT KÜHLFLÜSSIGKEIT
THERMODYNAMIC HEATING DEVICE WITH OPTIMISED MICRO CHANNEL CONDENSER FOR A MINIMUM REFRIGERANT LOAD

(30) Priorité: 07.02.2018 FR 1851014
(43) Date de publication de la demande: 14.08.2019
(73) Titulaire: Atlantic Industrie, 85000 La Roche sur Yon (FR)
(72) Inventeur: LOUINEAU, Alexandre, 85000 LA ROCHE SUR YON (FR); BONNARDOT, Frédéric, 85000 LA ROCHE SUR YON (FR); FLEURY, Bernard, 85000 La Roche Sur Yon (FR)
(74) Mandataire: Ipsilon

(56) Documents cités:
- EP-A1- 2 487 443
- WO-A1-2016/028878
- WO-A2-2011/077329
- US-A- 4 098 331
- US-A- 4 213 498

## Description

La présente invention est relative à un appareil de chauffage thermodynamique comprenant un condenseur enroulé autour d'une cuve destinée à renfermer du liquide US4213498 A décrit un appareil de chauffage avec les caractéristiques du préambule de la revendication 1.

On connaît des appareils de chauffage thermodynamique qui servent à chauffer une cuve remplie de liquide, par exemple de l'eau.

Ces appareils comprennent un système de pompe à chaleur qui comporte un circuit frigorifique contenant un fluide frigorigène ou réfrigérant.

Le fluide frigorigène circule dans ce circuit en passant par les différents composants du circuit (compresseur, condenseur, détendeur et évaporateur) et suivant le cycle thermodynamique classique : compression, condensation, détente et évaporation.

Ce fluide frigorigène est un élément nocif pour l'environnement et fait l'objet d'une réglementation européenne (F-gas) qui vise à réduire la quantité de fluide frigorigène nocif.

Par conséquent, la réduction drastique de fluide frigorigène est un enjeu fondamental des produits frigorifiques de demain.

Il est connu que dans un cycle thermodynamique, 60 à 90% de la charge en fluide frigorigène se trouve dans le condenseur dans différentes phases.

A ce jour, il existe plusieurs technologies de condenseur pour appareils de chauffage thermodynamique :
- le tube enroulé ;
- l'échangeur thermique immergé ;
- la ceinture de micro-canaux ;
- l'échangeur thermique à plaques.

La technologie du tube enroulé, qui a été la première employée sur les chauffe-eaux thermodynamiques, présente un volume interne important et donc une charge de fluide frigorigène trop élevée.

Une première amélioration de cette technologie a consisté à adopter une forme en D du tube, voire une forme aplatie, tant pour améliorer le transfert thermique que pour réduire son volume interne et donc la charge en fluide.

Cette technologie présente deux avantages :
- de par l'architecture proposée, le fluide frigorigène chargé en huile non alimentaire et provenant du compresseur est séparé de l'eau par deux parois, à savoir la paroi du tube et la paroi de la cuve du chauffe-eau, ce qui rend la solution conforme à l'exigence de double paroi imposée dans la réglementation sanitaire ;
- l'autre avantage réside dans la réduction de la température de peau de la cuve grâce à la grande surface de contact du condenseur avec la cuve, réduisant ainsi la création de tartre.

Cependant, la charge de fluide frigorigène avec un tube enroulé n'a pas pu être réduite de manière significative et plusieurs alternatives ont donc été proposées :
- Le condenseur immergé hélicoïde à ailettes. Cette solution, très performante d'un point de vue thermique pour transférer l'énergie à l'eau et pour réduire la charge de fluide frigorigène, s'est toutefois confrontée à la problématique de l'entartrage. La température élevée de la paroi de l'échangeur et la présence d'ailettes rapprochées a favorisé la création de tartre en surface, réduisant alors la performance thermique. De plus, les exigences réglementaires imposent la présence d'une double paroi entre le fluide non alimentaire et l'eau considérée comme alimentaire, ce qui pénalise la solution d'un point de vue économique.
- L'échangeur à plaques est une solution qui permet de minimiser la charge de fluide frigorigène mais qui exige d'adjoindre une pompe de circulation pour faire circuler l'eau d'un point de reprise en partie basse de la cuve et un rejet en partie supérieure de ladite cuve. Cette solution induit un risque de déstratification de la cuve et une réduction de la quantité d'eau chaude. En effet, l'élévation de température dans un échangeur à plaques n'est que de l'ordre de 10°C, ce qui conduit à injecter de l'eau tiède dans une zone d'eau chaude. L'échangeur à plaques présente les mêmes risques et inconvénients que l'échangeur immergé, à savoir l'exigence d'une double peau et les risques d'entartrage de partie de l'échangeur où l'eau de la cuve circule. Ces deux inconvénients conduisent à une diminution de la performance thermique de l'échangeur.
- La ceinture micro-canaux reprend les avantages du tube enroulé (double paroi et réduction de l'entartrage) et se focalise sur la minimisation du volume interne de l'échangeur pour une même surface d'échange donnée grâce à l'utilisation de mini ou micro-canaux. La section de passage réduite d'un tube ou d'une bande à mini/micro canaux induit une forte perte de charge linéaire qui exige, de ce fait, une longueur de mini/micro canaux faible pour rester dans les pertes de charges admissibles de l'échangeur. Ainsi les tubes ou bandes mini/micro canaux sont disposés en parallèle et les différents tubes ou bandes sont reliés entre eux par un tube collecteur qui permet la distribution du fluide dans les différents canaux. Le procédé d'assemblage et la typologie des collecteurs est dérivée de l'industrie automobile.

Cette technologie a permis une réduction significative de la charge en fluide frigorigène.

Cependant, il serait utile de pouvoir réduire davantage la charge de fluide frigorigène dans un condenseur à canaux au vu des contraintes règlementaires ci-dessus.

L'invention prévoit de pallier au moins un des problèmes évoqués ci-dessus en proposant un appareil de chauffage thermodynamique conforme à la revendication 1.

La forme générale en D de la section transversale des collecteurs (profil des collecteurs par exemple en forme de méplat) permet de réduire leur volume interne qui n'est pas utile au transfert de chaleur dans ces collecteurs par rapport au volume de collecteurs de section transversale circulaire dont le diamètre correspond à la longueur de la barre (par exemple rectiligne) du D. De ce fait, la quantité de fluide frigorigène présent dans les collecteurs peut être réduite par rapport à l'art antérieur. La partie bombée de la forme générale de D peut être semi-circulaire ou avoir une forme générale arrondie qui ne correspond pas nécessairement à la courbure d'un cercle. De manière générale, la partie bombée, plus ou moins aplatie et donc plus ou moins bombée, permet aux collecteurs de conserver une résistance mécanique à la déformation suffisante pour résister à la pression exercée par le fluide frigorigène, là où une forme à angles droits (ex : rectangle) n'atteindrait pas cet objectif.

Par ailleurs, la partie des collecteurs qui est destinée à être en contact avec la cuve de liquide à chauffer est celle qui correspond, suivant une vue en section transversale, à la barre du D (la barre du D est généralement sensiblement rectiligne, c'est-à-dire que ce côté du D est généralement sensiblement plat mais la barre du D peut alternativement être légèrement incurvée avec la concavité tournée vers la cuve pour épouser au plus près la convexité de la face externe de la cuve) de la section transversale des collecteurs. Le contact thermique et donc l'échange thermique avec la paroi de la cuve est ainsi amélioré (la résistance thermique entre le collecteur et la paroi est réduite), ce qui permet de réduire fortement les zones inactives thermiquement des collecteurs. En raison de ce contact barre du D - cuve sensiblement plan (ou en tout cas qui se rapproche d'un contact plan), les tensions mécaniques peuvent être diminuées sur les bandes, notamment à l'endroit de leur raccord avec les collecteurs.

En outre, le contact amélioré des collecteurs avec la paroi de la cuve permet également de diminuer les tensions ou contraintes mécaniques auxquelles sont soumises notamment les parties du condenseur situées à la jonction entre les canaux et les collecteurs.

Une telle forme en D n'induit généralement pas de pertes de charge trop élevées.

La forme en D du collecteur permet de garantir l'intégrité du condenseur lors de sa déformation par cintrage pour s'enrouler autour de la cuve et de son serrage sur celle-ci en évitant les contraintes mécaniques.

Chaque collecteur comporte généralement un ou plusieurs compartiments longitudinaux séparés l'un de l'autre par une séparation transversale qui s'étend suivant toute la section transversale du collecteur. Une ou plusieurs bandes de canaux sont agencées pour relier un premier compartiment qui est adjacent à une première extrémité d'un premier collecteur à un deuxième compartiment qui est adjacent à une première extrémité du deuxième collecteur en regard. Le deuxième compartiment possède une dimension longitudinale supérieure à celle du premier de manière à permettre à une ou plusieurs autres bandes de canaux de relier le deuxième compartiment du deuxième collecteur à un troisième compartiment du premier collecteur. Les premier et troisième compartiments du premier collecteur sont séparés transversalement l'un de l'autre par une paroi interne. Le schéma qui précède peut se répéter plusieurs fois en passant d'un collecteur à l'autre jusqu'à parvenir aux secondes extrémités opposées respectives des deux collecteurs.

Selon d'autres caractéristiques possibles :
- les deux extrémités opposées des canaux de chaque bande débouchent chacune directement à l'intérieur d'un des deux collecteurs ; cet agencement permet de limiter les pertes de charge par rapport à une configuration dans laquelle les deux extrémités opposées des canaux de chaque bande déboucheraient dans une zone intermédiaire de mélange entre bandes et collecteur ;
- chaque extrémité de canal pénètre à l'intérieur d'un collecteur à proximité d'une des deux extrémités opposées de la barre du D suivant une vue en section transversale de l'agencement collecteur-canaux ;
- suivant une vue en section transversale de l'agencement collecteur-canaux, les extrémités pénétrantes de chaque canal sont sensiblement parallèles à la barre du D ; cette disposition permet au fluide de s'écouler parallèlement à la paroi du collecteur correspondant à la barre du D en section transversale au lieu de frapper cette paroi et de générer des pertes de charge ; si la barre du D est incurvée pour s'adapter à la convexité de la face externe de la paroi de la cuve (la courbure n'est pas très prononcée généralement), les extrémités pénétrantes des canaux sont sensiblement parallèles à la corde reliant les deux extrémités opposées de la barre du D suivant une vue en section transversale de l'agencement collecteur-canaux ;
- les extrémités pénétrantes de chaque canal sont situées à une distance de la face interne de la barre du D qui est aussi petite que possible compte tenu des contraintes industrielles de fabrication des bandes de canaux et des collecteurs ; cet agencement permet aux bandes d'être le plus près possible de la face externe de la paroi de la cuve (au plus près de leurs extrémités en contact avec les collecteurs) et donc de favoriser les échanges thermiques avec la cuve ;
- les extrémités pénétrantes de chaque canal sont situées à une distance de la face interne de la barre du D qui est au maximum égale à deux fois l'épaisseur de la paroi constituant la barre du D ; en effet, au-delà de cette distance les bandes de canaux sont plus éloignés de la face externe de la paroi de la cuve, ce qui pénalise les échanges thermiques avec la cuve ;
- les extrémités pénétrantes des canaux pénètrent dans le collecteur sur une distance qui est généralement comprise, d'une part, entre une distance minimale qui est le maximum entre la moitié du diamètre intérieur du collecteur (ou la moitié de la distance maximale entre la face interne du collecteur d'où débouchent les canaux et la face interne opposée en regard) et 3 mm (généralement cette distance de pénétration permet de s'assurer que les canaux ne seront pas obstrués par exemple par le métal d'apport résultant de la brasure lors d'une opération de brasage pour solidariser les canaux aux collecteurs) et, d'autre part, une distance maximale qui est inférieure d'au moins 3mm au diamètre intérieur du collecteur (généralement cette distance de pénétration permet ne pas buter sur la face interne opposée en regard du collecteur et éventuellement de ne pas provoquer une perte de charge préjudiciable au bon fonctionnement du condenseur) ;
- suivant une vue en section transversale de l'agencement collecteur-canaux, la barre du D est rectiligne ou incurvée en direction de l'intérieur du collecteur ; la forme légèrement incurvée rentrée de la barre du D peut permettre au collecteur de mieux épouser la courbure de la face externe de la cuve;
- le volume interne d'au moins un des deux collecteurs est réduit sur au moins une portion de sa dimension longitudinale de manière à séparer en deux zones le volume interne du collecteur sur ladite au moins une portion, les extrémités pénétrantes de chaque canal débouchant seulement à l'intérieur d'une des deux zones qui est adjacente à la barre du D suivant une vue en section transversale de l'agencement collecteur-canaux ; les deux zones ne communiquent pas entre elles et, de ce fait, le fluide à l'intérieur du ou des collecteurs n'a accès qu'à une seule zone, celle qui est adjacente à la barre du D suivant une vue en section transversale de l'agencement collecteur-canaux, l'autre zone est inaccessible au fluide ; cet agencement permet de réduire davantage le volume inutile du ou des collecteurs ;
- chaque collecteur comporte une cloison interne qui sépare en deux zones le volume interne du tube et s'étend sur au moins une portion de la dimension longitudinale du collecteur, la cloison interne (étanche) s'étendant parallèlement à la barre du D suivant une vue en section transversale ; cette cloison interne renforce la résistance mécanique des collecteurs vis-à-vis de la pression exercée par le fluide frigorigène ; la cloison peut alternativement ne pas être parallèle à la barre du D ;
- les extrémités pénétrantes de chaque canal sont disposées entre la barre du D et la cloison interne suivant une vue en section transversale de l'agencement collecteur-canaux de manière à ce que l'une des zones soit délimitée par la barre du D et la cloison, l'autre zone étant délimitée par la cloison et une portion de la partie bombée du D ;
- le volume interne d'au moins un des deux collecteurs est réduit sur une portion de sa dimension longitudinale qui inclut l'une des deux extrémités opposées du collecteur ; généralement, cette réduction de volume est mise en place dans la portion du ou des collecteurs où du liquide est présent car c'est en phase liquide ou en phase mixte (gaz-liquide) que se trouve la plus grande quantité de fluide réfrigérant et où les pertes de charge sont les moins élevées; lorsque la réduction de volume intervient sur les deux collecteurs, elle n'est pas nécessairement présente sur la même portion de longueur dans les deux collecteurs mais elle englobe généralement les deux extrémités des deux collecteurs qui sont en regard l'une de l'autre ;
- le volume interne est réduit par la présence d'un insert qui est disposé contre une portion de la partie bombée du D de manière à laisser libre la zone adjacente à la barre du D suivant une vue en section transversale de l'agencement collecteur-canaux ; l'insert a une face courbée (bombée) en contact avec une face interne concave complémentaire d'une portion de la partie bombée du D et a une face sensiblement plane parallèle à la barre du D suivant une vue en section transversale ;
   selon la revendication 1, pour sa mise en place autour de la cuve, le condenseur est courbé/cintré autour d'un axe parallèle aux collecteurs de manière à adopter une forme générale cylindrique dans laquelle, suivant une vue en section transversale du condenseur, la barre du D de la section transversale de chaque collecteur est orientée vers l'intérieur du cylindre ;
- l'appareil comprend au moins un dispositif d'attache entre les deux collecteurs afin de les attacher l'un à l'autre. Généralement, plusieurs dispositifs d'attache sont agencés entre les deux collecteurs en étant répartis suivant leur dimension longitudinale.

D'autres caractéristiques et avantages apparaîtront au cours de la description qui va suivre, donnée uniquement à titre d'exemple non limitatif et faite en référence aux dessins annexés, sur lesquels :
- la figure 1 représente de manière schématique une cuve d'un appareil de chauffage thermodynamique selon un mode de réalisation de l'invention ;
- la figure 2 est une vue schématique d'une configuration possible de bande multi-canaux en section transversale ;
- la figure 3 est une vue schématique à plat du condenseur de la figure 1 ;
- la figure 4 est une vue schématique d'une configuration possible d'un collecteur en section transversale selon un mode de réalisation de l'invention;
- la figure 5 est une d'une configuration possible d'un dispositif d'attache de collecteur en section transversale ;
- les figures 6a et 6b sont des vues schématiques comparatives montrant l'agencement de collecteurs selon un mode de réalisation de l'invention (fig.6a) et selon l'art antérieur (fig.6b) contre la paroi d'une cuve ;
- la figure 7 est une vue schématique en perspective d'une configuration possible d'un condenseur selon un mode de réalisation de l'invention ;
- la figure 8 est une vue schématique d'une configuration possible d'un collecteur en section transversale selon un autre mode de réalisation de l'invention ;
- la figure 9a est une vue schématique à plat d'un condenseur selon un autre mode de réalisation de l'invention;
- la figure 9b est une vue schématique d'une configuration possible d'un des collecteurs de la figure 9a en section transversale ;
- la Figure 10 est une vue schématique en section transversale d'une configuration possible d'un collecteur de condenseur pour cuve d'appareil de chauffage thermodynamique.

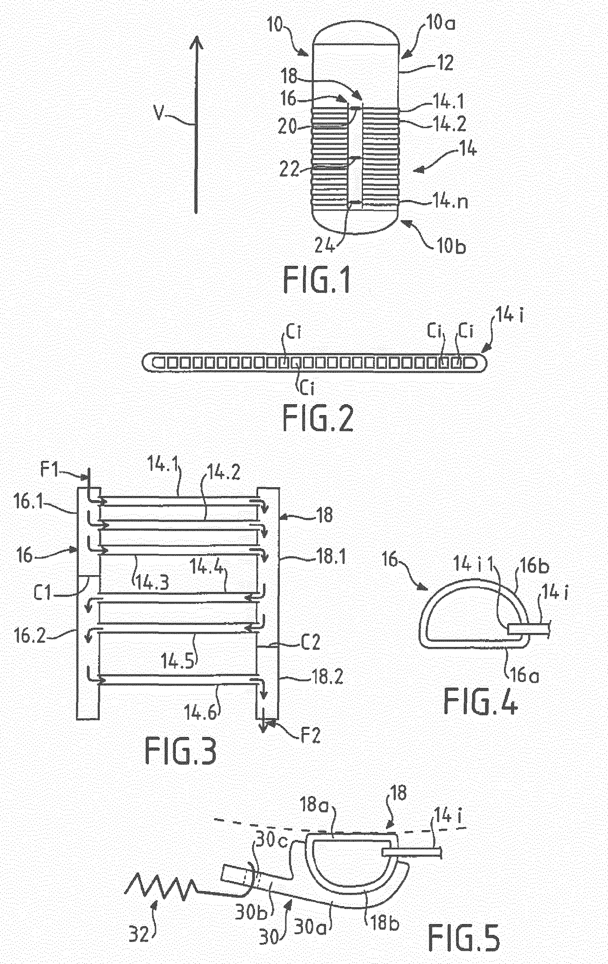

Comme représenté de manière très schématique sur la figure 1, une cuve 10 d'un appareil de chauffage thermodynamique renferme du liquide, par exemple de l'eau, qui est destinée à être chauffée par un circuit frigorifique d'une pompe à chaleur (PAC) de l'appareil. A titre d'exemple, l'appareil est un chauffe-eau. Bien que la description qui suit soit faite en référence à un chauffe-eau, on notera qu'elle s'applique à tout type d'appareil de chauffage thermodynamique comprenant une cuve de liquide à chauffer.

La cuve 10 remplie d'eau s'étend suivant une dimension longitudinale qui, ici, est prise suivant l'axe vertical dans la mesure où la cuve est disposée verticalement pour son installation et son fonctionnement. Toutefois, la cuve peut alternativement être disposée horizontalement ou de manière inclinée entre la position verticale et la position horizontale selon d'autres configurations possibles d'installation.

Dans la cuve 10 de l'eau chauffée est par exemple prélevée en partie supérieure de la cuve, notamment à une extrémité supérieure 10a de la cuve, tandis que de l'eau non chauffée est introduite en partie inférieure de la cuve, notamment à une extrémité inférieure opposée 10b de la cuve. Les différents piquages pour l'injection d'eau et son prélèvement ne sont pas représentés par souci de clarté. La cuve comprend une paroi 12 qui est ici globalement cylindrique et est fermée à ses deux extrémités opposées par deux fonds ou calottes 14 et 16 sensiblement hémisphériques, conférant à l'ensemble de la cuve une forme généralement sensiblement cylindrique.

Le chauffe-eau comprend également, de manière non représentée, un système de pompe à chaleur qui comprend un circuit frigorifique dont une partie est enroulée autour de la cuve 10 et qui contient un fluide frigorigène par exemple du r134a.

La partie 14 du circuit frigorifique qui est enroulée autour de la cuve forme généralement le condenseur du circuit. Il comprend une pluralité d'enroulements 14.1, 14.2, ..., 14.n parallèles entre eux (disposés à des cotes différentes) dans chacun desquels circule le fluide frigorigène et qui sont en contact thermique avec la face externe de la paroi 12 de la cuve.

Chaque enroulement correspond à une partie du condenseur qui s'étend ici sur la quasi-totalité de la circonférence de la cuve : les deux extrémités opposées de chaque enroulement sont raccordées chacune à un collecteur perpendiculaire aux enroulements et les deux collecteurs parallèles 16, 18, écartés l'un de l'autre sont attachés ensemble par des dispositifs d'attache 20, 22, 24 qui s'étendent chacun sur une portion angulaire (de l'ordre de quelques degrés) de la circonférence de la cuve. Les dispositifs d'attache qui sont conventionnels sont répartis suivant la dimension longitudinale des collecteurs (ici la hauteur). Selon une variante non représentée un seul dispositif d'attache peut être utilisé et il s'étend sur la quasi-totalité de la dimension longitudinale des collecteurs afin de répartir longitudinalement l'effort de serrage.

Comme illustré à la figure 2, chaque enroulement 14i prend ici la forme d'une bande qui comprend une pluralité de canaux de fluide Ci adjacents et parallèles entre eux. Il s'agit par exemple de mini ou micro-canaux dont le diamètre hydraulique peut être de l'ordre de 0,4 à 1 millimètres.

L'ensemble formé des bandes parallèles entre elles et des deux collecteurs auxquels est raccordée chaque bande par ses deux extrémités opposées est apte à être courbé autour d'un axe parallèle à l'axe des collecteurs de manière à adopter une forme générale cylindrique. Cet axe correspond à l'axe de la cuve cylindrique lorsque l'ensemble est conformé autour de la cuve pour sa mise en place. Chaque bande s'enroule ainsi autour de la cuve sur la quasi-totalité de la circonférence de la cuve, à la manière d'une ceinture annulaire comme illustré sur la figure 1.

Les collecteurs 16, 18 assurent la distribution du fluide frigorigène aux différentes bandes. Ces collecteurs sont raccordés chacun à une partie (composant) du système de PAC.

Dans ce mode de réalisation les bandes sont identiques mais peuvent être différentes (au moins pour certaines) dans une variante.

La figure 3 illustre l'ensemble des bandes et des collecteurs formant le condenseur de manière déployée dans un plan afin de faciliter la compréhension du fonctionnement.

La configuration du condenseur qui est illustrée a été simplifiée par souci de commodité. Toutefois, le nombre de bandes, leur répartition entre les différentes zones internes (ou compartiments) des collecteurs ainsi que différents détails de réalisation peuvent varier.

Dans le cas présent le volume interne des deux collecteurs 16, 18 est réduit sur au moins une portion de sa dimension longitudinale de manière à séparer en deux zones 16.1 et 16.2, 18.1 et 18.2 le volume interne de chaque collecteur sur ladite au moins une portion.

Dans l'exemple représenté, le fluide frigorigène arrive par le haut (F1) dans un premier compartiment 16.1 du collecteur 16 où il se distribue dans les bandes 14.1, 14.2, 14.3, ressort de chacune d'elles à leur extrémité opposée dans un premier compartiment 18.1 du collecteur 18 qu'il parcourt longitudinalement avant de se distribuer dans les bandes 14.4, 14.5 et de ressortir de chacune d'elles à leur extrémité opposée dans un deuxième compartiment 16.2 du collecteur 16. Le fluide parcourt longitudinalement ce compartiment, est ensuite distribué dans la bande 14.6 dont il ressort à son extrémité opposée pour déboucher dans un deuxième compartiment 18.2 du collecteur 18 et en ressortir par le bas (F2).

Les deux collecteurs 16, 18 sont ici respectivement divisés en deux compartiments ou zones internes par une cloison séparatrice c1, c2. Un plus grand nombre de compartiments peut être envisagé dans d'autres configurations. Les bandes de canaux ont des extrémités opposées qui débouchent respectivement dans les zones correspondantes en vis-à-vis des deux collecteurs.

La figure 4 représente le collecteur 16 en section transversale (la section est identique pour les deux collecteurs) selon un mode de réalisation de l'invention.

Le collecteur 16 présente en section transversale une forme générale de D qui s'étend sur toute la dimension longitudinale du collecteur.

La forme générale de D comprend une partie 16a formant la barre du D (partie non nécessairement rectiligne mais pouvant être concave pour s'adapter à la convexité de la face externe de la paroi de la cuve) et une partie bombée 16b qui s'étend d'une extrémité de la barre du D à l'extrémité opposée de ladite barre. La partie bombée a ici une forme générale semi-circulaire bien qu'elle puisse adopter d'autres types de convexités, voire une forme aplatie avec seulement deux raccords latéraux plus ou moins inclinés et/ou incurvés pour rejoindre la barre du D.

Dans la mesure où la section du collecteur n'est pas circulaire ou sensiblement circulaire mais est tronquée, notamment en forme générale de D (la barre du D ayant une longueur correspondant sensiblement au diamètre du tube collecteur de l'art antérieur), le volume interne est réduit, ce qui permet de diminuer le volume de fluide frigorifique dans les collecteurs et donc dans le condenseur. A titre d'exemple, la réduction de volume interne d'un collecteur est de l'ordre de 45% par rapport à un collecteur de section circulaire de même diamètre.

La barre 16a du D est destinée à être agencée en vis-à-vis de la paroi de la cuve (la face bombée 16b tournant le dos à la cuve) et contre celle-ci, ce qui permet un positionnement du collecteur au plus proche de la paroi (le plus en contact possible avec la paroi), donc une plus faible résistance thermique entre les deux et ainsi un meilleur transfert thermique. De ce fait, on obtient aussi un meilleur contact des bandes avec la paroi de la cuve et donc un échange thermique favorisé.

Comme représenté sur la figure 4, la bande 14i (ce qui suit s'applique à toutes les bandes 141 à 14n) a une extrémité 14i1 qui pénètre à l'intérieur du collecteur, à proximité d'une des deux extrémités opposées de la barre 16a du D. Il en est de même à l'extrémité opposée (non représentée) de la bande 14i avec le collecteur 18. L'extrémité 14i1 contient les extrémités de tous les canaux Ci (fig.2) formant la bande et qui débouchent dans le volume interne du collecteur.

Comme illustré, les extrémités pénétrantes de la bande 14i et donc de chaque canal de celle-ci sont sensiblement parallèles à la barre du D. Cet agencement permet de faciliter l'encastrement des bandes dans les collecteurs.

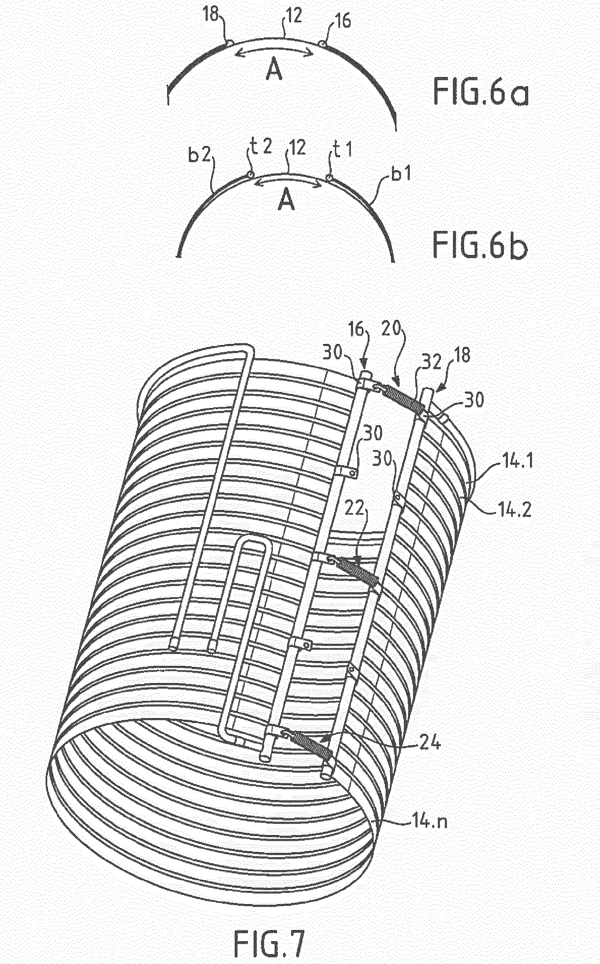

La figure 5 illustre en section transversale un dispositif d'attache possible fixé au collecteur 18. Ce dispositif est également destiné à être fixé au collecteur 16, comme représenté sur la figure 7.

Le dispositif d'attache qui correspond aux dispositifs 20, 22 et 24 comprend une pièce 30 formant support et renfort d'attache qui présente une partie 30a creuse destinée à s'interfacer avec la partie bombée 18b du collecteur et à y être fixée par exemple par brasage.

La pièce 30 comporte une partie opposée libre 30b percée d'un trou traversant 30c destinée à recevoir une des deux extrémités opposées d'un tendeur ou ressort 32 (pièce de serrage) comme illustré schématiquement sur la figure 5.

Sur cette figure la paroi 12 de la cuve a été illustrée en pointillés afin de montrer le positionnement possible du collecteur 18 contre cette paroi.

Les figures 6a et 6b sont des vues comparatives montrant l'amélioration de positionnement des collecteurs selon un mode de réalisation de l'invention (figure 6a) par rapport à l'art antérieur (figure 6b).

Sur la figure 6a les collecteurs 16, 18 de section transversale en forme générale de D sont positionnés au plus près de la paroi 12 de la cuve grâce à la barre du D venant au contact de cette paroi sur une grande partie de sa longueur (on notera que la barre du D peut alternativement être concave afin de mieux épouser la convexité locale de la paroi de la cuve).

Au contraire, sur la figure 6b les collecteurs en forme de tubes t1 et t2 à section circulaire ne peuvent que venir tangenter la paroi 12 en un point du cercle (il s'agit d'un contact ponctuel en section transversale et d'un contact sur une génératrice du cylindre si l'on considère le tube collecteur sur toute sa longueur), créant ainsi une grande résistance thermique entre les tubes et la paroi.

En outre, les portions b1 et b2 des bandes de canaux qui sont proches des extrémités de ces bandes ne peuvent être en contact avec la paroi 12 en raison de ce contact ponctuel/linéaire tube collecteur-paroi de cuve, créant ainsi une zone inactive pour le transfert thermique. Une telle configuration pénalise donc les transferts thermiques entre l'échangeur et la paroi de la cuve et donc avec le liquide à chauffer.

Par ailleurs, les portions b1 et b2 des bandes de canaux, notamment à l'endroit où elles se raccordent aux collecteurs, sont soumises à des efforts de torsions élevés du fait des dispositifs d'attache à ressorts qui tendent à rapprocher l'un de l'autre les deux collecteurs.

La configuration des collecteurs 16 et 18 de la figure 6a permet de diminuer les efforts de torsion appliqués aux raccordements collecteurs-bandes de canaux.

La figure 7 illustre en perspective l'ensemble du condenseur formé des bandes 14.1 à 14.n raccordées fluidiquement aux collecteurs 16, 18 qui sont fixés l'un à l'autre par les dispositifs d'attache 20, 22 et 24. Sur cette figure, certains dispositifs ne sont pas complets : seule la pièce de support et de renfort 30 est présente sur les collecteurs en attente de réception d'une pièce complémentaire de serrage 32.

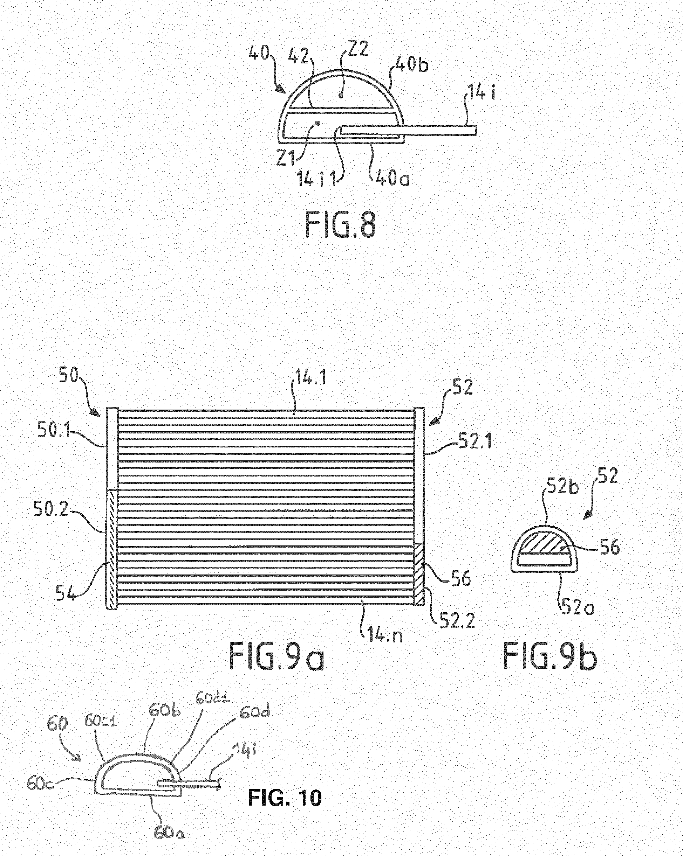

Dans un autre mode de réalisation illustré à la figure 8, le collecteur 40 (en forme générale de D en section transversale avec la barre 40a et la partie ou face bombée 40b) comporte une cloison interne 42 qui sépare en deux zones internes z1, z2, le volume interne semi-circulaire du collecteur. La cloison interne 42 s'étend sur au moins une portion de la dimension longitudinale du collecteur, parallèlement à la barre 40a du D. L'autre collecteur peut avoir une configuration similaire.

Comme représenté sur la figure 8, les extrémités pénétrantes de chaque bande et donc de chaque canal (ici de la bande 14i1) sont disposées entre la barre 40a du D et la cloison interne 42 de manière à ce que l'une des zones, z1, soit délimitée par la barre du D et la cloison. L'autre zone z2 est, quant à elle, délimitée par la cloison 42 et une portion de la partie bombée 40b du D.

Cette cloison interne supplémentaire assure une double fonction :
- elle renforce mécaniquement l'échangeur afin qu'il ait une meilleure tenue pour résister à la pression du fluide frigorifique ;
- elle réduit davantage le volume intérieur inutile du collecteur en rendant la zone supérieure z2 non utilisée par le fluide frigorifique, ce qui permet de réduire davantage le volume du fluide dans le collecteur.

La cloison interne supplémentaire peut être réalisée simplement en aluminium par extrusion.

Dans un autre mode de réalisation, le volume interne d'au moins un des deux collecteurs est réduit sur une portion de sa dimension longitudinale (longueur) qui inclut l'une des deux extrémités opposées du collecteur. La réduction de volume imposée au fluide frigorifique intervient sur une portion de longueur de l'un ou des deux collecteurs et laisse ainsi moins de place au fluide dans ladite portion.

Ceci peut s'avérer utile dans la ou les zones du condenseur où le fluide frigorifique est en phase liquide ou mixte et donc où les pertes de charge sont les plus faibles.

Dans l'exemple illustré à la figure 9a, les deux collecteurs 50 et 52 sont tous deux divisés en deux compartiments 50.1 et 50.2, 52.1 et 52.2 (comme sur la figure 3) et le volume interne du second compartiment de chaque collecteur 50.2 et 52.2 est réduit. On notera qu'un nombre différent de compartiments internes peut être envisagé et la réduction de volume interne s'applique au compartiment d'extrémité de chaque collecteur. Par ailleurs, un unique compartiment d'une extrémité à l'autre du collecteur peut alternativement être envisagé.

Le volume interne de chaque collecteur 50, 52 est ainsi réduit par exemple par la présence d'un insert 54, 56 qui est disposé à l'intérieur du collecteur correspondant, ici dans le second compartiment 50.2, 52.2.

L'insert, par exemple 56, est disposé contre une portion concave de la partie bombée 52b du D de manière à laisser libre la zone adjacente à la barre 52a du D suivant une vue en section transversale de l'agencement collecteur-canaux (figure 9b). L'insert joue le rôle d'un obturateur qui occupe une partie du volume interne du collecteur afin de réduire le volume laissé libre pour le fluide. Les inserts ont des longueurs et des sections adaptées aux compartiments où ils sont mis en place. L'insert 54 est ainsi plus long que l'insert 56.

La Figure 10 illustre une variante de réalisation d'une forme générale de D d'un des collecteurs, noté 60, d'un condenseur (raccordé à une bande de canaux 14i comme pour les autres exemples de réalisation) pour cuve d'appareil de chauffage thermodynamique.

Dans cette variante, la forme générale du D est plus aplatie que sur les figures décrites précédemment de telle manière que la barre du D 60a est sensiblement parallèle à une portion sensiblement rectiligne 60b de la partie bombée du D. La barre du D 60a et ladite portion 60b sont raccordées entre elles par deux portions ou flancs latéraux 60c et 60d plus ou moins inclinés l'un en direction de l'autre.

Par ailleurs, les deux portions ou flancs latéraux 60c, 60d rejoignent chacun la portion sensiblement rectiligne 60b de la partie bombée du D suivant un raccord incurvé 60c1, 60d1 de manière à ce que la forme globale interne du D résiste à la pression interne de fluide.

La configuration de la figure 10 n'est qu'un exemple possible de variante et s'applique à toute la description qui précède.

## Revendications

1. Appareil de chauffage thermodynamique comprenant une cuve (10) sensiblement cylindrique renfermant du liquide, avec un condenseur (14) qui est enroulé autour de la cuve à la manière d'une ceinture, le condenseur (14) comprenant deux collecteurs (16,18) parallèles entre eux qui encadrent une pluralité de bandes (14.1-n) parallèles entre elles et qui sont perpendiculaires aux collecteurs, chaque bande comprenant une pluralité de canaux (Ci) parallèles entre eux qui comportent chacun deux extrémités opposées, les deux extrémités opposées des canaux de chaque bande débouchant chacune à l'intérieur d'un des deux collecteurs, **caractérisé en ce que** chaque collecteur (16, 18) présentant en section transversale une forme générale de D qui s'étend sur toute la dimension longitudinale du collecteur, la forme générale de D comprenant une partie (16a) formant la barre du D et une partie bombée (16b) qui s'étend d'une extrémité de la barre du D à l'extrémité opposée de ladite barre, la barre du D étant orientée en vis-à-vis de la cuve (10) et, pour sa mise en place autour de la cuve, le condenseur étant courbé autour d'un axe parallèle aux collecteurs de manière à adopter une forme générale cylindrique dans laquelle, suivant une vue en section transversale du condenseur, la barre du D de la section transversale de chaque collecteur est orientée vers l'intérieur du cylindre.

2. Appareil selon la revendication 1, **caractérisé en ce que** les deux extrémités opposées (14i1) des canaux de chaque bande (14.1-n) débouchent chacune directement à l'intérieur d'un des deux collecteurs.

3. Appareil selon la revendication 2, **caractérisé en ce que** chaque extrémité (14i1) de canal pénètre à l'intérieur d'un collecteur (16) à proximité d'une des deux extrémités opposées de la barre (16a) du D suivant une vue en section transversale de l'agencement collecteur-canaux.

4. Appareil selon la revendication 3, **caractérisé en ce que**, suivant une vue en section transversale de l'agencement collecteur-canaux, les extrémités pénétrantes (14i1) de chaque canal sont sensiblement parallèles à la barre (16a) du D.

5. Appareil selon la revendication 3 ou 4, **caractérisé en ce que** les extrémités pénétrantes (14i1) de chaque canal sont situées à une distance de la face interne de la barre du D qui est aussi petite que possible compte tenu des contraintes industrielles de fabrication des bandes de canaux et des collecteurs.

6. Appareil selon l'une des revendications 1 à 5, **caractérisé en ce que** les extrémités pénétrantes (14i1) de chaque canal sont situées à une distance de la face interne de la barre du D qui est au maximum égale à deux fois l'épaisseur de la paroi constituant la barre du D.

7. Appareil selon l'une des revendications 1 à 6, **caractérisé en ce que**, suivant une vue en section transversale de l'agencement collecteur-canaux, la barre du D est rectiligne ou incurvée en direction de l'intérieur du collecteur.

8. Appareil selon l'une des revendications 1 à 7, **caractérisé en ce que** le volume interne d'au moins un (40) des deux collecteurs est réduit sur au moins une portion de sa dimension longitudinale de manière à séparer en deux zones le volume interne du collecteur sur ladite au moins une portion, les extrémités pénétrantes (14i1) de chaque canal débouchant seulement à l'intérieur d'une des deux zones qui est adjacente à la barre du D suivant une vue en section transversale de l'agencement collecteur-canaux.

9. Appareil selon l'une des revendications 1 à 8, **caractérisé en ce que** chaque collecteur comporte une cloison interne (42) qui sépare en deux zones (Z1, Z2) le volume interne du collecteur et s'étend sur au moins une portion de la dimension longitudinale du collecteur, la cloison interne s'étendant parallèlement à la barre du D suivant une vue en section transversale.

10. Appareil selon les revendications 8 et 9, **caractérisé en ce que** les extrémités pénétrantes (14i1) de chaque canal sont disposées entre la barre du D et la cloison interne (42) suivant une vue en section transversale de l'agencement collecteur-canaux de manière à ce que l'une (Z1) des zones soit délimitée par la barre (40a) du D et la cloison, l'autre zone (Z2) étant délimitée par la cloison et une portion de la partie bombée (40b) du D.

11. Appareil selon l'une des revendications 1 à 7, **caractérisé en ce que** le volume interne d'au moins un des deux collecteurs (50, 52) est réduit sur une portion de sa dimension longitudinale qui inclut l'une des deux extrémités opposées du collecteur.

12. Appareil selon la revendication 11, **caractérisé en ce que** le volume interne est réduit par la présence d'un insert (56) qui est disposé contre une portion (52b) de la partie bombée du D de manière à laisser libre la zone adjacente à la barre (52a) du D suivant une vue en section transversale de l'agencement collecteur-canaux.

13. Appareil selon l'une des revendications 1 à 12, **caractérisé en ce qu'**il comprend au moins un dispositif d'attache (20, 22, 24) entre les deux collecteurs afin de les attacher l'un à l'autre.

## Patentansprüche

1. Thermodynamisches Heizgerät, umfassend einen im Wesentlichen zylindrischen Tank (10), der Flüssigkeit einschließt, mit einem Kondensator (14), der um den Behälter nach Art eines Gürtels gewickelt ist, wobei der Kondensator (14) zwei zueinander parallele Kondensatoren (16, 18) umfasst, die eine Vielzahl von zueinander parallelen Bändern (14.1-n) umschließen, und die senkrecht zu den Kollektoren sind, wobei jedes Band eine Vielzahl von zueinander parallelen Kanälen (Ci) umfasst, die jeweils zwei einander gegenüber liegende Enden aufweisen, wobei die zwei einander gegenüber liegenden Kanäle jedes Bands jeweils im Inneren eines der zwei Kollektoren münden, **dadurch gekennzeichnet, dass** jeder Kollektor (16, 18) im Querschnitt im Allgemeinen eine D-Form aufweist, die sich auf der gesamten Längsabmessung des Kollektors erstreckt, wobei die allgemeine D-Form einen Teil (16a) umfasst, der den senkrechten Strich des D bildet, und einen gewölbten Teil (16b), der sich von einem Ende des senkrechten Strichs des D an das gegenüber liegende Ende des senkrechten Strichs erstreckt, wobei der senkrechte Strich des D auf die gegenüber liegende Seite des Behälters (10) gerichtet ist, und wobei für seine Anbringung um den Behälter der Kondensator um eine Achse parallel zu den Kollektoren gewölbt ist, um eine im Allgemeinen zylindrische Form anzunehmen, in der, gemäß einer Querschnittansicht des Kondensators, der senkrechte Strich des D des Querschnitts jedes Kollektors hin zur Innenseite des Zylinders ausgerichtet ist.

2. Gerät nach Anspruch 1, **dadurch gekennzeichnet, dass** die zwei einander gegenüber liegenden Enden (14i1) der Kanäle jedes Bands (14.1-n) jeweils direkt im Inneren eines der zwei Kollektoren münden.

3. Gerät nach Anspruch 2, **dadurch gekennzeichnet, dass** jedes Kanalende (14i1) in das Innere eines Kollektors (16) in der Nähe eines der zwei einander gegenüber liegenden Ende des senkrechten Strichs (16a) des D gemäß einer Querschnittansicht der Anordnung Kollektor-Kanäle eindringt.

4. Gerät nach Anspruch 3, **dadurch gekennzeichnet, dass** gemäß einer Querschnittansicht der Anordnung Kollektor-Kanäle die eindringenden Enden (14i1) jedes Kanals im Wesentlichen parallel zum senkrechten Strich (16a) des D sind.

5. Gerät nach Anspruch 3 oder 4, **dadurch gekennzeichnet, dass** sich die eindringenden Enden (14i1) jedes Kanals in einem Abstand von der inneren Seite des senkrechten Strichs des D befinden, der so klein wie möglich ist, aufgrund der Zwänge der industriellen Herstellung der Kanalbänder und Kollektoren.

6. Gerät nach einem der Ansprüche 1 bis 5, **dadurch gekennzeichnet, dass** sich die eindringenden Enden (14i1) jedes Kanals in einem Abstand von der inneren Seite des senkrechten Strichs des D befinden, der maximal gleich zweimal der Dicke der Wand ist, die den Strich des D darstellt.

7. Gerät nach einem der Ansprüche 1 bis 6, **dadurch gekennzeichnet, dass** gemäß einer Querschnittansicht der Anordnung Kollektor-Kanäle der senkrechte Strich des D geradlinig oder gekrümmt in Richtung der Innenseite des Kollektors ist.

8. Gerät nach einem der Ansprüche 1 bis 7, **dadurch gekennzeichnet, dass** das innere Volumen von mindestens einem (40) der zwei Kollektoren auf mindestens einem Abschnitt seiner Längsabmessung reduziert ist, um das innere Volumen des Kollektors auf dem mindestens einen Abschnitt in zwei Zonen zu trennen, wobei die eindringenden Enden (14i1) jedes Kanals nur im Inneren einer der zwei Zonen münden, die gemäß einer Querschnittansicht der Anordnung Kollektor-Kanäle benachbart dem senkrechten Strich des D ist.

9. Gerät nach einem der Ansprüche 1 bis 8, **dadurch gekennzeichnet, dass** jeder Kollektor eine innere Trennwand (42) aufweist, die das innere Volumen des Kollektors in zwei Zonen (Z1, Z2) trennt und sich auf mindestens einem Abschnitt der Längsabmessung des Kollektors erstreckt, wobei sich die innere Trennwand parallel zum senkrechten Strich des D gemäß einer Querschnittansicht erstreckt.

10. Gerät nach Anspruch 8 und 9, **dadurch gekennzeichnet, dass** die eindringenden Enden (14i1) jedes Kanals zwischen dem senkrechten Strich des D und der inneren Trennwand (42) gemäß einer Querschnittansicht der Anordnung Kollektor-Kanäle angeordnet sind, so dass die eine (Z1) der Zonen durch den senkrechten Strich (40a) des D und die Trennwand begrenzt ist, wobei die andere Zone (Z2) durch die Trennwand und einen Abschnitt des gewölbten Teils (40b) des D begrenzt ist.

11. Gerät nach einem der Ansprüche 1 bis 7, **dadurch gekennzeichnet, dass** das innere Volumen des mindestens einen der zwei Kollektoren (50, 52) auf einem Abschnitt seiner Längsabmessung reduziert ist, der eine der zwei einander gegenüber liegenden Enden des Kollektors einschließt.

12. Gerät nach Anspruch 11, **dadurch gekennzeichnet, dass** das innere Volumen durch die Anwesenheit eines Einsatzes (56) reduziert ist, der gegen einen Abschnitt (52b) des gewölbten Teils des D angebracht ist, um die Zone benachbart dem senkrechten Strich (52a) des D gemäß einer Querschnittansicht der Anordnung Kollektor-Kanäle frei zu lassen.

13. Gerät nach einem der Ansprüche 1 bis 12, **dadurch gekennzeichnet, dass** es mindestens eine Befestigungsvorrichtung (20, 22, 24) zwischen den zwei Kollektoren umfasst, um sie aneinander zu befestigen.

## Claims

1. A thermodynamic heating device comprising a substantially cylindrical vessel (10) containing liquid, with a condenser (14) which is wound around the vessel like a belt, the condenser (14) comprising two mutually parallel collectors which surround a plurality of mutually parallel strips (14.1-n) which are perpendicular to the collectors, each strip comprising a plurality of mutually parallel channels (Ci) which each include two opposite ends, the two opposite ends of the channels of each strip each opening to the inside of one of the two collectors, **characterized in that** each collector (16, 18) having, in cross-section, a general D shape which extends over the entire longitudinal dimension of the collector, the general D shape comprising a part (16a) forming the bar of the D and a curved part (16b) which extends from one end of the bar of the D to the opposite end of said bar, the bar of the D being oriented opposite the vessel (10) and, for its placement around the vessel, the condenser being curved around an axis which is parallel to the collectors so as to adopt a cylindrical general shape in which, seen in a cross-sectional view of the condenser, the bar of the D of the cross-section of each collector is oriented toward the inside of the cylinder.

2. The device according to claim 1, **characterized in that** the two opposite ends (14i1) of the channels of each strip (14.1-n) each open directly to the inside of one of the two collectors.

3. The device according to claim 2, **characterized in that** each channel end (14i1) penetrates inside a collector (16) near one of the two opposite ends of the bar (16a) of the D in a cross-sectional view of the collector-channels arrangement.

4. The device according to claim 3, **characterized in that**, in a cross-sectional view of the collector-channels arrangement, the penetrating ends (14i1) of each channel are substantially parallel to the bar (16a) of the D.

5. The device according to claim 3 or 4, **characterized in that** the penetrating ends (14i1) of each channel are located at a distance from the inner face of the bar of the D which is as small as possible in light of the industrial manufacturing constraints of the channel strips and of the collectors.

6. The device according to one of claims 1 to 5, **characterized in that** the penetrating ends (14i1) of each channel are located at a distance from the inner face of the bar of the D which is at most equal to twice the thickness of the wall making up the bar of the D.

7. The device according to one of claims 1 to 6, **characterized in that**, in a cross-sectional view of the collector-channels arrangement, the bar of the D is rectilinear or curved toward the inside of the collector.

8. The device according to one of claims 1 to 7, **characterized in that** the inner volume of at least one (40) of the two collectors is reduced over at least a portion of its longitudinal dimension so as to separate the inner volume of the collector into two zones over said at least one portion, the penetrating ends (14i1) of each channel emerging only to the inside of one of the two zones which is adjacent to the bar of the D in a cross-sectional view of the collector-channels arrangement.

9. The device according to one of claims 1 to 8, **characterized in that** each collector includes an inner partition (42) which separates the inner volume of the collector into two zones (Z1, Z2) and extends over at least a portion of the longitudinal dimension of the collector, the inner partition extending parallel to the bar of the D in a cross-sectional view.

10. The device according to claims 8 and 9, **characterized in that** the penetrating ends (14i1) of each channel are positioned between the bar of the D and the inner partition (42) in a cross-sectional view of the collector-channels arrangement such that one (Z1) of the zones is delimited by the bar (40a) of the D and the partition, the other zone (Z2) being delimited by the partition and a portion of the curved part (40b) of the D.

11. The device according to one of claims 1 to 7, **characterized in that** the inner volume of at least one of the two collectors (50, 52) is reduced over a portion of its longitudinal dimension which includes one of the two opposite ends of the collector.

12. The device according to claim 11, **characterized in that** the inner volume is reduced by the presence of an insert (56) which is positioned against a portion (52b) of the curved part of the D so as to leave the zone adjacent to the bar (52a) of the D free in a cross-sectional view of the collector-channels arrangement.

13. The device according to one of claims 1 to 12, **characterized in that** it comprises at least one fastening device (20, 22, 24) between the two collectors so as to fasten them to one another.
